# EUROPEAN PATENT APPLICATION

(11) **EP 2 277 846 A1**
(43) Date of publication of application: **26.01.2011**
(21) Application number: 09176509.9
(22) Date of filing: 19.11.2009
(51) Int. Cl.: C07C 17/156

(54) **Obtaining free iodine in preparation of aqueous iodine chloride by adding potassium iodide**

(30) Priority: 21.07.2009 US 227082 P
(71) Applicant: GE Healthcare AS, 0401 Oslo (NO)
(72) Inventor: Ingvoldstad, Odd Einar, N-4521, Spangereid (NO)
(74) Representative: Wulff, Marianne Weiby

(57) **Abstract**

This invention relates generally to the preparation of non-ionic X-ray contrast agents, iohexol, ioversol, and iodixanol. It further relates to an improved method for the iodination reaction, a key step in the industrial preparation of non-ionic X-ray contrast agents. In particular, it relates to a method for producing free iodine in an aqueous solution of iodine chloride by adding minor amounts of potassium iodide.

## Description

### TECHNICAL FIELD

This invention relates generally to the preparation of non-ionic X-ray contrast agents. It further relates to a method for reducing undesirable byproducts in the iodination reaction, a key step in the industrial preparation of non-ionic X-ray contrast agents. In particular, it relates to a method for forming free iodine in the preparation of an aqueous solution of iodine chloride by adding minor amounts of potassium iodide.

### BACKGROUND OF THE INVENTION

Non-ionic X-ray contrast agents constitute a very important class of pharmaceutical compounds produced in large quantities. 5-[N-(2,3-dihydroxypropyl)-acetamido]-N,N'-bis(2,3-dihydroxypropyl)-2,4,6-triiodo-isophthalamide ("iohexol"), N,N'-Bis(2,3-dihydroxypropyl)-5-[(2-hydroxyacetyl)-(2-hydroxyethyl)amino]-2,4,6-triiodo-benzene-1,3-dicarboxamide ("ioversol"), and 1,3-bis(acetamido)-N,N'-bis[3,5-bis(2,3-dihydroxypropyl-aminocarbonyl)-2,4,6-triiodophenyl]-2-hydroxypropane ("iodixanol") are important examples of such compounds. They contain one or two triiodinated benzene rings.

The industrial production of iohexol, ioversol, and iodixanol involves a multistep chemical synthesis. The final drug substance must meet the stringent purity standards set forth by regulatory agencies. While purity is of the utmost importance, it is also important to reduce the cost of production by optimizing each synthetic step. Even a small improvement in reaction design can lead to significant savings in a large scale production.

The instant improvement is directed to the iodination reagent, iodine chloride, used in converting 5-amino-N,N'-bis(2,3-dihydroxypropyl)-isophthalamide (or ABA) to 5-amino-N,N'-bis(2,3-dihydroxypropyl)-2,4,6-triiodoisophthalamide (Compound B). *See* Scheme 1; *see also* U.S. Patent Nos. 6,441,235 and 6,274,762. This instant invention is directed to an improved method to preparing an aqueous iodine chloride solution.

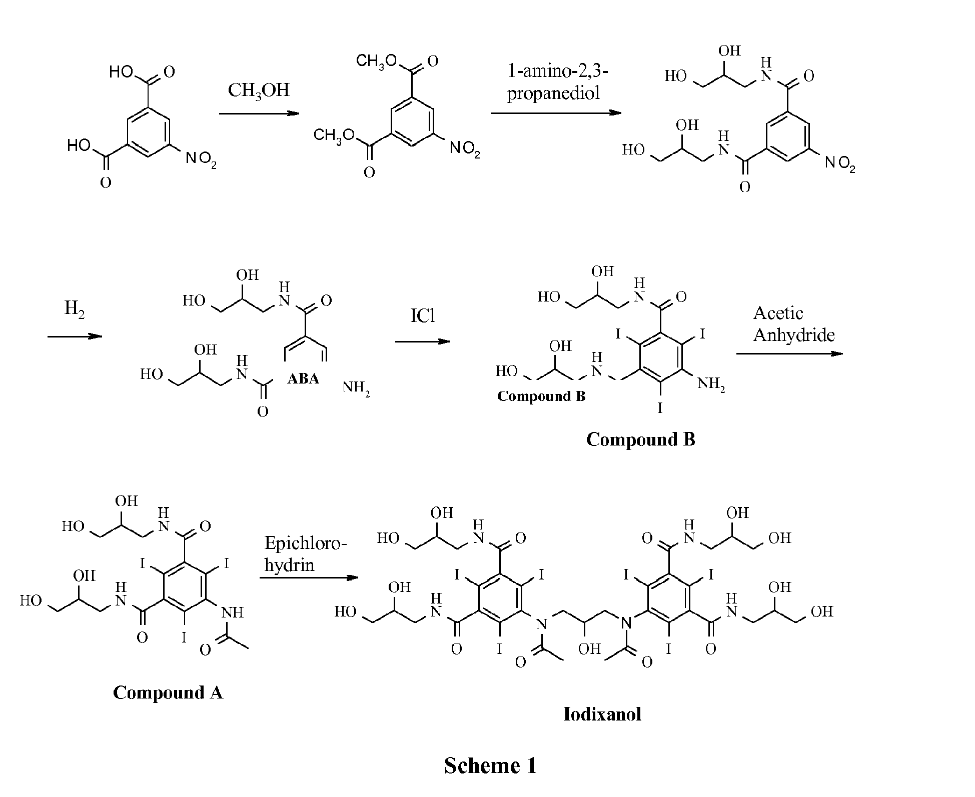

### SUMMARY OF THE INVENTION

The present invention provides a process for optimizing an iodination reagent in the synthesis of non-ionic X-ray contrast agent. In particular, the instant process comprises the step of adding potassium iodide to an aqueous solution of iodine chloride to form free iodine.

### DETAILED DESCRIPTION OF THE INVENTION

An aqueous solution of iodine chloride is used as the iodinating agent in the synthesis of most X-ray contrast agents, including iohexol and iodixanol. Iodine chloride can be produced by several methods, one of them involving the following reaction between iodine and sodium chlorate:

3I₂ + NaClO₃ + 6HCl → 6ICl + NaCl + 3H₂O (Reaction 1)

A typical concentration of aqueous solutions of iodine chloride used for iodination of substituted aromates as part of X-ray contrast agents synthesis is about 40-60 w/w %, preferably about 45-55 w/w %. We found that a small amount of free iodine in the aqueous solution of iodine chloride is desirable in the iodination reaction. In particular, it has been found that a lack of free iodine in the iodine chloride solution used in the iodination reaction increases the amount of chlorinated byproduct, where a chlorine atom, rather than an iodine atom, has been introduced on the benzene ring. In the case of iohexol and iodixanol synthesis, it is observed that such a monochlorinated byproduct is difficult to remove in the subsequent purification steps.

While the presence of free iodine is desirable, the stoichiometric excess of iodine added from the beginning of Reaction 1 is held to a minimum to optimize the raw material efficiency with respect to iodine, which by far is the most expensive of the raw materials in the process. Thus, this need to fully utilize raw iodine leads to some batches with no detectable iodine left after Reaction 1 is completed. In addition, the addition of further amounts of iodine, e.g. in the forms of prills or flakes, at this stage is impractical.

We have found that small amounts of potassium iodide can be added to obtain the desired free molecular iodine after the completion of Reaction 1. The iodide ions in the potassium iodide added are oxidized by the iodine chloride to form iodine:

KI + ICl → I₂ + KCl

This is an easy and inexpensive way to obtain the desired excess of molecular iodine in the aqueous solution of iodine chloride. Potassium iodide may be added in small portions followed by an extraction test to detect if free iodine has been obtained.

The invention is illustrated further by the following examples that are not to be construed as limiting the invention in scope to the specific procedures described in them.

### EXAMPLES

### EXAMPLE 1

Iodine (2700 kg, 10.6 kmole), hydrochloric acid (35 %, 2285 kg, 21.9 kmole), water (250 kg, 13.3 kmole) and sodium chloride (475 kg, 8.1 kmole) are mixed in a reactor at 20 °C. An aqueous solution of sodium chlorate (43 w/w %, 864 kg, 2.6 mole) is added carefully to the reactor over 3-4 hours at rigorous stirring. The reaction continues with moderate stirring at about 50 °C for at least 10 hours. Extraction of a reaction sample with dichloromethane in presence of hydrochloric acid gives a negative result (no colour in the organic phase), which means that there is no free iodine in the iodine chloride solution prepared.

Small portions of potassium iodide (about 2-4 kg in each portion) are added. The free iodine test (dichloromethane extraction) gives a positive result after the addition of less than 15 kg potassium iodide.

All patents, journal articles, publications and other documents discussed and/or cited above are hereby incorporated by reference.

## Claims

1. A process for preparing an aqueous solution of iodine chloride for use in synthesizing non-ionic X-ray contrast agent wherein the aqueous solution of iodine chloride is added potassium iodide to form free iodine.
